(19) Europäisches Patentamt
European Patent Office
Office européen des brevets

(11) **EP 3 084 233 B1**

(12) **EUROPÄISCHE PATENTSCHRIFT**

(45) Veröffentlichungstag und Bekanntmachung des Hinweises auf die Patenterteilung:
**01.11.2017 Patentblatt 2017/44**

(21) Anmeldenummer: **14812524.8**

(22) Anmeldetag: **16.12.2014**

(51) Int Cl.:
***F16B 13/06*** *(2006.01)*

(86) Internationale Anmeldenummer:
**PCT/EP2014/077941**

(87) Internationale Veröffentlichungsnummer:
**WO 2015/091465 (25.06.2015 Gazette 2015/25)**

(54) **SPREIZANKER MIT VERDREHSICHERUNG**

EXPANSION ANCHOR COMPRISING ANTI-TWIST DEVICE

CHEVILLE À EXPANSION AVEC SÉCURITÉ ANTI-ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2013 EP 13198324**

(43) Veröffentlichungstag der Anmeldung:
**26.10.2016 Patentblatt 2016/43**

(73) Patentinhaber: **Hilti Aktiengesellschaft**
**9494 Schaan (LI)**

(72) Erfinder:
• **DIJKHUIS, Arjen Detmer**
**6800 Feldkirch (AT)**
• **SCHOLZ, Patrick**
**9470 Buchs (CH)**
• **MEIER, Robert**
**6800 Feldkirch-Gisingen (AT)**
• **RICKERS, Peter**
**9468 Sax (CH)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
**DE-A1-102008 057 584**

**Beschreibung**

Die Erfindung betrifft einen Spreizanker gemäss dem Oberbegriff des Anspruchs 1. Ein solcher Spreizanker ist ausgestattet mit einem Bolzen und einer Spreizhülse, welche den Bolzen umgibt, wobei der Bolzen im Bereich seines vorderen Endes einen Spreizkonus aufweist, welcher die Spreizhülse radial aufweitet, wenn er in die Spreizhülse eingezogen wird, wobei der Bolzen, insbesondere im Bereich seines hinteren Endes, einen Gewindeabschnitt zum Einleiten von Zugkräften in den Bolzen aufweist, wobei der Bolzen eine Schulter aufweist, die eine, insbesondere axial gerichtete, Verschiebung der Spreizhülse vom Spreizkonus hinweg begrenzt, und wobei der Bolzen zumindest einen Verdrehsicherungsvorsprung zum Hemmen einer Drehung, insbesondere um die Bolzenlängsachse, der Spreizhülse relativ zum Bolzen aufweist, wobei der Verdrehsicherungsvorsprung von der Schulter ausgeht und am Bolzen radial nach aussen vorsteht.

Ein Spreizanker ist beispielsweise aus der DE 4116149 A1 bekannt. Er wird dazu verwendet, um Anbauteile an einem Bohrloch in einem festen Substrat, beispielsweise einem Betonsubstrat, zu verankern. Der bekannte Spreizanker weist einen länglichen Bolzen auf, der im Bereich seines vorderen Endes mit einem Spreizkonus versehen ist, und der im Bereich seines hinteren Endes ein Gewinde aufweist, auf dem eine Mutter sitzt. Der Spreizkonus weitet sich zum vorderen Ende hin, das heisst entgegen der Auszugsrichtung, auf. In Auszugsrichtung versetzt zum Spreizkonus ist am Bolzen eine Spreizhülse angeordnet. Diese Spreizhülse ist zum vorderen Ende des Bolzens hin auf den Spreizkonus verschiebbar am Bolzen gelagert. Zum rückwärtigen Ende des Bolzens hin ist die Verschiebung der Spreizhülse relativ zum Bolzen durch einen als Ringschulter ausgebildeten Anschlag begrenzt.

Beim Setzen des Ankers wird der Bolzen mit dem ersten Ende voran entgegen der Auszugsrichtung in das Bohrloch im Substrat eingeschlagen. Die Spreizhülse wird dabei von der Ringschulter mitgenommen und gelangt daher ebenfalls in das Bohrloch. Anschliessend wird die Mutter so lange angeschraubt, bis sie am Substrat oder einen gegebenenfalls vorhandenen Anbauteil als Widerlager anliegt, und sodann weiter angezogen, bis ein vorgegebenes Drehmoment erreicht ist. Durch dieses Anziehen der Mutter wird der Bolzen wieder ein Stück weit in Auszugsrichtung aus dem Bohrloch herausgezogen. Nach dem Einschlagen des Spreizankers verhakt sich die Spreizhülse an der Innenwand des Bohrlochs und wird daher beim Herausziehen des Bolzens im Bohrloch zurückgehalten. Infolgedessen wird der Spreizkonus des Bolzens in die Spreizhülse eingezogen, wobei die Spreizhülse aufgrund des zunehmenden Durchmessers des Spreizkonus aufgespreizt wird. Dabei verklemmt sich der Spreizanker mit der Spreizhülse im Substrat, so dass Zuglasten in das Substrat übertragen werden können. Dieses Grundprinzip kann vorzugsweise auch beim erfindungsgemässen Anker zum Einsatz kommen.

Bei der Anwendung von Spreizankern unter realen Umweltbedingung kann unter Umständen Sand oder Bohrklein an das Gewinde des Bolzens gelangen, was zu einer unerwünschten Erhöhung der Reibung zwischen Mutter und Bolzen und damit zu einem Anstieg des zum Anschrauben der Mutter benötigten Drehmoments führen kann. Im Extremfall kann die Reibung der Mutter am Gewinde die Reibung des Bolzens in der Spreizhülse übersteigen. In diesem Fall kann es zu einer unerwünschten Hemmung zwischen Mutter und Bolzen kommen. Der Bolzen dreht dann in der Hülse durch, so dass die Mutter nicht angeschraubt und der Anker nicht ohne weiteres gesetzt werden kann.

Um ein solches Durchdrehen, das heisst eine solche unerwünschte Rotation des Bolzens relativ zur Hülse zu verhindern, schlägt die nächstkommende US 3855896 A vor, am Umfang des Bolzens ausgehend von der Ringschulter eine Rändelung vorzusehen, welche von innen gegen die Spreizhülse wirkt und hierbei die Reibung zwischen Bolzen und Hülse erhöht.

Auch die DE 2256822 A1 befasst sich mit Verdrehsicherungen der Spreizhülse am Bolzen. Im Gegensatz zur US3855896A, bei der die Verdrehsicherung durch eine Reibungserhöhung realisiert wird, schlägt die DE 2256822 A1 Verdrehsicherungen durch korrespondierende geometrische Formen, also formschlüssige Verdrehsicherungen vor.

Weitere Spreizanker mit Verdrehsicherungen zwischen Spreizhülse und Bolzen gehen aus DE 29501182 U1, DE 3411285 A1, GB 1414562 A, CA 953958 A1, DE 2161224 A1, US 3750526 A, EP 0 874 167 B1 und DE 6610690 U hervor.

Gemäss EP 0893610 A1 wird eine Verdrehsicherung des Bolzens durch radial vom Bolzen vorstehende Stege realisiert, die unmittelbar gegen die Bohrlochwand wirken.

Die DE 10 2008 057 584 A1 beschreibt einen Spreizanker, in dessen Halsbereich mindestens drei Verstärkungsrippen angeordnet sind, die bis zur Anschlagschulter reichen, und die zur Ableitung von Spannungen, insbesondere bei einer Querbeanspruchung, dienen sollen.

Gemäss DE 3508015 A1 geht die senkrecht zur Längsachse des Bolzens stehende und an der Schulter ausgebildete Anschlagfläche für die Hülse über eine konkav gewölbte Kehle in die Mantelfläche des zylindrischen Halsbereichs des Bolzens über, wodurch das Auftreten einer zu Bruch neigenden scharfen Kante vermieden werden soll.

Aufgabe der Erfindung ist es, einen besonders zuverlässigen, insbesondere zuverlässig zu installierenden, Spreizanker mit besonders guten Lastwerten anzugeben, der zugleich besonders einfach zu fertigen ist.

Die Aufgabe wird erfindungsgemäss durch einen Spreizanker mit den Merkmalen des Anspruchs 1 gelöst. Bevorzugte Ausführungsformen des Spreizankers sind in den abhängigen Ansprüchen angegeben.

Ein erfindungsgemässer Spreizanker ist dadurch gekennzeichnet, dass die axiale Länge I des Verdrehsicherungsvorsprungs kleiner ist als das Doppelte der Ganghöhe p des am Bolzen angeordneten Gewindeabschnitts. Vorzugsweise ist die axiale Länge I des Verdrehsicherungsvorsprungs kleiner ist als die Ganghöhe p des am Bolzen angeordneten Gewindeabschnitts. Demgemäss gilt zumindest:

$$ I < 2 \times p $$

und vorzugsweise:

$$ I < p. $$

Ein Grundgedanke der Erfindung kann darin gesehen werden, den Verdrehsicherungsvorsprung, der am hinteren Endbereich der Spreizhülse, beispielsweise von innen reibend, gegen die Spreizhülse wirkt, sehr kurz auszuführen, so dass der Verdrehsicherungsvorsprung schon unmittelbar nach Beginn des Ausziehens des Bolzens aus dem Bohrloch beim Setzen des Ankers den Wirkkontakt mit der Spreizhülse verliert. Die Erfindung hat zum einen erkannt, dass eine Verdrehsicherung nach Beginn des Spreizvorgangs der Spreizhülse häufig nicht mehr erforderlich ist. Denn sobald die Spreizhülse vom Spreizkonus radial aufgeweitet und gegen die Bohrlochwand gepresst wird, nimmt der radiale Anpressdruck und somit die Reibung zwischen Spreizhülse und Bolzen sehr stark zu, so dass ab diesem Zeitpunkt in der Regel keine Verdrehsicherung zwischen Bolzen und Spreizhülse mehr erforderlich ist. Die Erfindung hat weiterhin erkannt, dass eine Verdrehsicherung im Verlauf des Spreizvorgangs beim Setzen des Ankers sowie im anschliessenden belasteten Zustand des Ankers unter Umständen sogar nachteilig sein kann. So erhöht beispielsweise eine einfache reibungsbasierte Verdrehsicherung nicht nur die Reibung in Umfangsrichtung, sondern auch die Reibung in Axialrichtung. Dies wiederum kann zum einen den Spreizvorgang behindern. Zum anderen kann es ein vorteilhaftes Nachspreizen der Hülse des fertig installierten Ankers und/oder ein Vor- und Zurückgleiten des Spreizkonus in der Hülse des fertig installierten Ankers, beispielsweise bei zyklisch auf- und zugehenden Betonrissen, behindern. Darüber hinaus können einfache Verdrehsicherungen auch zu einer unerwünschten punktuellen oder linienförmigen Belastung der Hülse führen. Auf diesen Erkenntnissen aufbauend schlägt die Erfindung eine besondere Verdrehsicherung vor, die nur zu Beginn des Setzvorgangs wirkt und rasch auskuppelt, sobald das Spreizen der Hülse begonnen hat. Demgemäss wirkt die Verdrehsicherung nur dann, wenn sie auch tatsächlich benötigt wird, wohingegen sie in dem Zustand des Ankers, in dem sie potenziell nachteilig sein kann, keine Wirkung mehr entfaltet.

Erreicht wird diese nur temporäre Wirkung der Verdrehsicherung zum einen dadurch, dass der Verdrehsicherungsvorsprung von der Schulter ausgeht, das heisst dass sich der Verdrehsicherungsvorsprung unmittelbar an die Schulter anschliesst, und zum anderen dadurch, dass die axiale Ausdehnung des Verdrehsicherungsvorsprungs sehr klein ist, wobei die axiale Ausdehnung insbesondere in der Grössenordnung der Ganghöhe des Gewindes liegt. Aufgrund dieser Dimensionierung wirkt der Verdrehsicherungsvorsprung nur unmittelbar zu Beginn des Setzvorgangs gegen die Hülse. Sobald die Mutter etwa eine Umdrehung angezogen ist, kuppelt der Verdrehsicherungsvorsprung von der Spreizhülse aus und kann den weiteren Spreizvorgang nicht mehr behindern. Somit können die Vorteile einer Verdrehsicherung erzielt werden, ohne deren potenzielle Nachteile in Kauf nehmen zum müssen. Dieser Vorteil kann nach der Erfindung auch mit besonders geringem Herstellungsaufwand erzielt werden. Denn da sich erfindungsgemäss der Verdrehsicherungsvorsprung unmittelbar an die Schulter anschliesst, kann er in herstellungstechnisch besonders einfacher Weise zusammen mit der Schulter geformt werden, beispielsweise durch Stauchen.

Unter der Ganghöhe kann in fachüblicher Weise insbesondere der Abstand zwischen zwei Gewindestufen, insbesondere desselben Gewindegangs, entlang der Längsachse des Bolzens verstanden werden, das heisst der axiale Weg, der durch eine Umdrehung des Gewindeabschnitts und/oder eine Umdrehung der Mutter auf dem Gewindeabschnitt zurückgelegt wird. Der Bolzen kann, insbesondere axial versetzt zum Gewindeabschnitt, auch Zusatzgewindeabschnitte aufweisen. Sofern Zusatzgewindeabschnitte vorhanden sind, kann der Gewindeabschnitt, dessen Ganghöhe hier relevant ist, insbesondere derjenige sein, auf dem die Mutter angeordnet ist.

Die Spreizhülse ist erfindungsgemäss längs des Bolzens verschiebbar am Bolzen angeordnet, insbesondere befestigt. Soweit in diesem Beschreibungstext von "radial", "axial" und "Umfangsrichtung" die Rede ist, kann sich dies insbesondere auf die Längsachse des Bolzens beziehen, die insbesondere die Symmetrieund/oder Mittelachse des Bolzens sein kann. Der Spreizanker kann insbesondere ein kraftkontrolliert spreizender Spreizanker sein. Die Spreizhülse und/oder der Bolzen bestehen geeigneterweise aus einem Metallmaterial, welches, beispielsweise zur gezielten Beeinflussung der Reibung, auch beschichtet sein kann.

Erfindungsgemäss kann der Spreizkonus durch eine gemeinsame axiale Bewegung des Bolzens und des Spreizkonus relativ zur Spreizhülse in die Spreizhülse eingezogen werden. Hierzu ist der der Spreizkonus geeigneterweise, zumindest in Axialrichtung, fest am Bolzen angeordnet. Vorzugsweise ist der Spreizkonus einstückig mit dem Bolzen ausgebildet. Der erfindungsgemässe Spreizanker kann vorzugsweise auch als Bolzenanker bezeichnet werden.

Erfindungsgemäss wird die Spreizhülse von der schrägen Oberfläche des Spreizkonus radial nach aussen gedrängt und dabei gegen die Bohrlochwand im Substrat gepresst, wenn der Spreizkonus relativ zur Spreizhülse in Auszugsrichtung des Bolzens axial versetzt wird. Hierdurch wird der Spreizanker im Bohrloch verankert. Vorzugsweise verläuft die Auszugsrichtung parallel zur Längsachse des Bolzens und/oder zeigt aus dem Bohrloch heraus. Zweckmässigerweise nimmt der Abstand der Oberfläche des Spreizkonus von der Längsachse des Bolzens entgegen der Auszugsrichtung, das heisst mit zunehmendem Abstand vom Gewindeabschnitt, zu. Die Oberfläche des Spreizkonus kann streng konisch sein. Entsprechend der fachüblichen Definition eines Spreizkonus muss sie dies aber nicht. Beispielsweise kann die Oberfläche des Spreizkonus im Längsschnitt auch konvex oder konkav sein.

Die Schulter bildet einen rückwärtigen Anschlag für die Spreizhülse, der eine Verschiebung der Spreizhülse vom Spreizkonus hinweg, das heisst eine Verschiebung der Spreizhülse in Auszugsrichtung, begrenzt. Die Schulter weist vorzugsweise eine ringförmige oder zumindest unterbrochen ringförmige Anschlagfläche für die Spreizhülse auf, wobei die Anschlagfläche bevorzugt senkrecht zur Längsachse des Bolzens verlaufen kann. Zweckmässigerweise ist die Schulter axial zwischen dem Spreizkonus und dem Gewindeabschnitt und/oder axial zwischen der Spreizhülse und dem Gewindeabschnitt angeordnet. Vorzugsweise weist der Bolzen einen ringförmigen Bund auf, der den Bolzen umläuft, der insbesondere einstückig mit dem Bolzen ausgebildet sein kann, und/oder der ein zumindest lokales Querschnittsmaximum am Bolzen bildet, wobei die Schulter, an welcher die Spreizhülse anschlägt, an der Vorderseite des Bundes ausgebildet ist.

Der Verdrehsicherungsvorsprung ist vorzugsweise einstückig mit dem Bolzen ausgebildet, was herstellungstechnisch vorteilhaft sein kann. Der Verdrehsicherungsvorsprung geht erfindungsgemäss von der Schulter, insbesondere von der an der Schulter ausgebildeten Anschlagfläche für die Spreizhülse, aus, was insbesondere beinhalten kann, dass er axial von der Schulter und/oder der Anschlagfläche vorsteht und/oder unmittelbar in die Schulter und/oder die Anschlagfläche übergeht.

Besonders vorteilhaft ist es, dass die axiale Länge des Verdrehsicherungsvorsprungs kleiner ist als das 0.1-fache der maximalen axialen Ausdehnung der Spreizhülse, dass die axiale Länge des Verdrehsicherungsvorsprungs kleiner ist als die maximale Dicke der Spreizhülse, oder/und dass die axiale Länge des Verdrehsicherungsvorsprungs kleiner ist als das 0.1-fache des maximalen Durchmessers des Bolzens. Gemäss diesen Varianten können Verdrehsicherungsvorsprünge erhalten werden, die besonders zuverlässig zu Beginn des Spreizvorgangs von der Spreizhülse auskuppeln. Der Durchmesser des Bolzens wird zweckmässigerweise senkrecht zu seiner Längsachse gemessen.

Weiterhin ist es besonders zweckmässig, dass der Verdrehsicherungsvorsprung, insbesondere zumindest teilweise reibend, gegen die dem Bolzen zugewandte, insbesondere radial zugewandte, Innenseite der Spreizhülse wirkt. Gemäss dieser Ausführungsform deckt die Spreizhülse den Verdrehsicherungsvorsprung, insbesondere nach dem Einschlagen des Ankers in das Bohrloch und/oder zu Beginn des Spreizvorgangs, zumindest teilweise radial nach aussen hin ab. Dies kann herstellungstechnisch besonders einfach umsetzbar sein, zum Beispiel durch einfaches Umwickeln des Bolzens mit einem Blechband. Darüber hinaus kann in diesem Fall der Verdrehsicherungsvorsprung auch zur anfänglichen Zentrierung der Spreizhülse verwendet werden. Für einen reinen Formschluss oder für einen kombinierten Reibschluss und Formschluss kann in der Innenseite der Spreizhülse eine radial gerichtete Einprägung vorgesehen sein, in welcher der Verdrehsicherungsvorsprung aufgenommen ist. Die Innenseite der Spreizhülse kann im Bereich des Verdrehsicherungsvorsprungs aber vorzugsweise auch glatt sein. Die Innenseite der Spreizhülse, gegen welche der Verdrehsicherungsvorsprung wirkt, ist insbesondere hülsenförmig und/oder zumindest annähernd zylindrisch ausgebildet und/oder dem Halsbereich des Bolzens zugewandt. Vorzugsweise ist durch den Verdrehsicherungsvorsprung eine zumindest teilweise auf Reibung basierende Verdrehsicherung zwischen Spreizhülse und Bolzen gegeben. Dies kann insbesondere beinhalten, dass der Verdrehsicherungsvorsprung radial von innen gegen die Spreizhülse drückt, so dass eine Rotationsbewegung der Hülse relativ zum Verdrehsicherungsvorsprung um die Längsachse des Bolzens herum eine Reibung zwischen der Oberfläche des Verdrehsicherungsvorsprungs und der Innenoberfläche der Spreizhülse bewirkt.

Vorzugsweise ist die maximale in Radialrichtung gemessene Höhe des Verdrehsicherungsvorsprungs kleiner ist als die Ganghöhe des am Bolzen angeordneten Gewindeabschnitts. Dies kann herstellungstechnisch vorteilhaft sein, da der erforderliche Verformungsgrad relativ klein sein ist.

Eine weitere bevorzugte Ausführungsform der Erfindung liegt darin, dass der Bolzen zumindest einen weiteren Verdrehsicherungsvorsprung aufweist. Hierdurch kann die Zuverlässigkeit der Verdrehsicherung weiter erhöht werden. Ferner kann durch mehrere Verdrehsicherungsvorsprünge die Spreizhülse in besonders einfacher Weise zum Bolzen zentriert werden, so dass zu Beginn des Spreizvorgangs besonders gut definierte Kräfteverhältnisse herrschen. Vorzugsweise können insgesamt zumindest drei Verdrehsicherungsvorsprünge vorgesehen sein. Bei dieser Ausgestaltung kann in die Reibung zu Beginn des Spreizvorgangs in besonders einfacher Weise auf die Verdrehsicherungsvorsprünge konzentriert werden, was die Zuverlässigkeit noch weiter steigern kann. Sofern mehrere Verdrehsicherungsvorsprünge vorgesehen sind, können die Merkmale, die in dieser Beschreibung im Zusammenhang mit einem Verdrehsicherungsvorsprung genannt sind, für einen einzigen Verdrehsicherungsvorsprung, für einen Teil der Verdrehsicherungsvorsprünge oder für sämtliche Verdrehsicherungsvorsprünge gelten. Sofern mehrere Verdrehsicherungsvorsprünge vorgesehen sind, können diese insbesondere äquidistant am Umfang des Bolzens angeordnet sein.

Weiterhin kann vorgesehen sein, dass die Spreizhülse zumindest einen, insbesondere axial verlaufenden, Schlitz aufweist. Dieser Schlitz kann den Spreizvorgang erleichtern. Der Schlitz kann zwei benachbarte Spreizsegmente trennen. Sofern ein Schlitz vorgesehen ist, kann der Bolzen einen Sperrvorsprung aufweisen, der in den Schlitz eingreift. In diesem Fall kann eine zusätzliche Verdrehsicherung gegeben sein, die formschlüssig wirkt. Der Schlitz reicht vorzugsweise bis zum vorderen Ende und/oder bis zum hinteren Ende der Spreizhülse.

Nach der Erfindung kann der Gewindeabschnitt insbesondere ein Aussengewindeabschnitt sein. Dies kann im Hinblick auf die Handhabbarkeit vorteilhaft sein. Der Gewindeabschnitt dient vorzugsweise zum Einleiten von Zugkräften, die in Auszugsrichtung gerichtet sind, in den Bolzen. Insbesondere kann der Richtungsvektor der Auszugsrichtung vom Spreizkonus zum Gewindeabschnitt gerichtet sein.

Eine weitere bevorzugte Ausgestaltung der Erfindung liegt darin, dass auf dem Gewindeabschnitt eine Mutter mit einem zum Gewindeabschnitt korrespondierenden Gewinde, insbesondere Innengewinde, angeordnet ist. Diese Mutter kann zum Befestigen des Anbauteils und zum Einziehen des Bolzens mit dem Spreizkonus in die Spreizhülse dienen. Die Mutter ist insbesondere um die Längsachse des Bolzens drehbar auf dem Gewindeabschnitt angeordnet. Der Gewindeabschnitt, dessen Ganghöhe nach der Erfindung relevant ist, kann insbesondere im Inneren der Mutter liegen.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:

Figur 1:    eine teilweise längsgeschnittene Ansicht eines in einem Betonsubstrat gesetzten erfindungsgemässen Spreizankers gemäss einer ersten Ausführungsform;

Figur 2:    eine perspektivische Ansicht des Bolzens des Ankers aus Figur 1 mit Spreizhülse;

Figur 3:    eine perspektivische Ansicht des Bolzens des Ankers aus Figur 1 ohne Spreizhülse;

Figur 4:    eine Längsschnittansicht des Bolzens des Ankers aus Figur 1;

Figur 5:    eine Seitenansicht des Bolzens des Ankers der Figur 1 im Ausschnitt X der Figur 4; und

Figur 6:    eine Querschnittsansicht A-A gemäss Figur 5 des Bolzens des Ankers aus Figur 1 einschliesslich Spreizhülse.

Die Figuren zeigen ein Ausführungsbeispiel eines erfindungsgemässen Spreizankers 1. Der Spreizanker 1 weist einen Bolzen 10 und eine Spreizhülse 20 auf, wobei die Spreizhülse 20 den Bolzen 10 ringförmig umgibt. Im Bereich seines vorderen Endes 51 weist der Bolzen 10 einen Spreizkonus 12 für die Spreizhülse 20 auf, an den sich rückwärtig ein Halsbereich 11 stetig anschliesst. Der Spreizkonus 12 ist fest am Bolzen 10 angeordnet und vorzugsweise einstückig mit dem Bolzen 10 ausgebildet.

Im Halsbereich 11 weist der Bolzen 10 einen im Wesentlichen konstanten, bevorzugt zylindrischen, Querschnitt auf. Am hieran anschliessenden Spreizkonus 12 ist die Oberfläche des Bolzens 10 als Schrägfläche 13 ausgebildet, und der Durchmesser des Bolzens 10 nimmt dort zum ersten Ende 51 hin zu, das heisst der Bolzen 10 weitet sich am Spreizkonus 12 ausgehend vom Halsbereich 11 zu seinem vorderen ersten Ende 51 hin auf. Die Schrägfläche 13 am Spreizkonus 12 kann konisch im streng mathematischen Sinne sein, muss dies aber nicht.

Auf der dem Spreizkonus 12 abgewandten Seite des Halsbereichs 11 weist der Bolzen 10 einen als ringförmige Schulter 17 ausgebildeten Anschlag für die Spreizhülse 20 auf. Im Bereich seines rückwärtigen Endes 52 weist der Bolzen einen als Aussengewindeabschnitt ausgebildeten Gewindeabschnitt 18 zur Einleitung von Zugkräften in den Bolzen 10 auf. Auf diesem Gewindeabschnitt 18 sitzt eine Mutter 8.

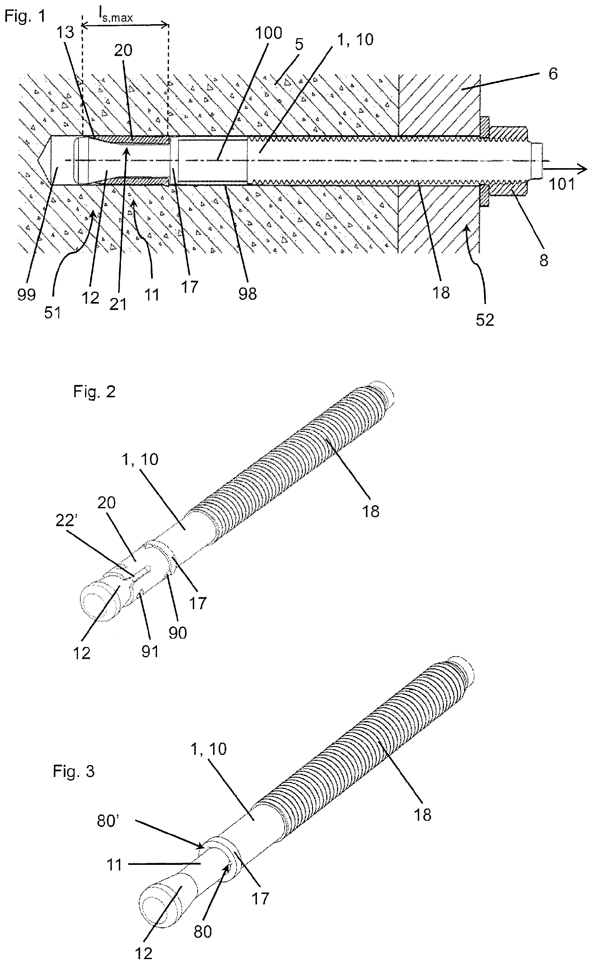

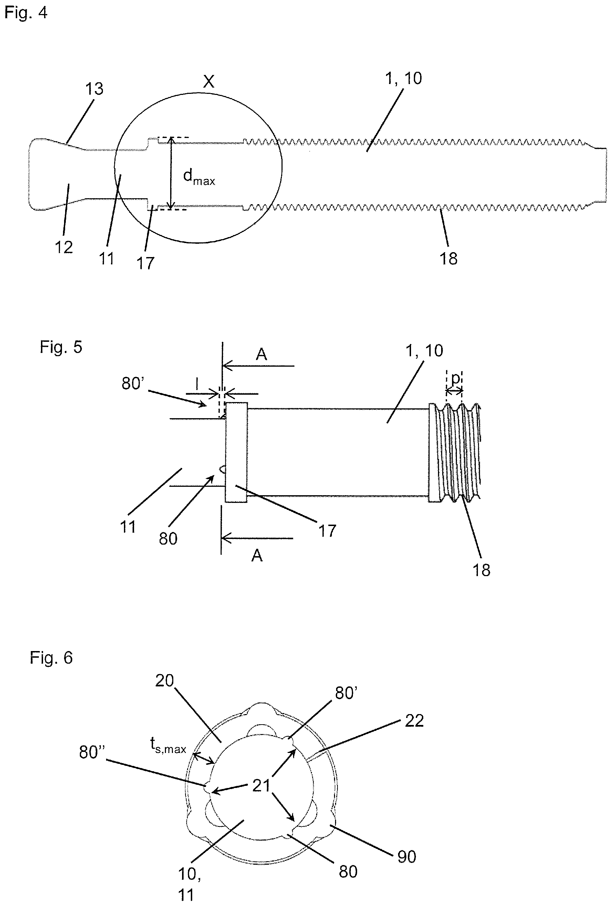

Wie insbesondere die Figuren 2 und 6 zeigen weist die Spreizhülse 20 axial verlaufende Schlitze 22 und 22', welche des Spreizen der Spreizhülse 20 erleichtern.

Beim Setzen des Spreizankers 1 wird der Bolzen 10 mit seinem vorderen Ende 51 voran durch ein Anbauteil 6 hindurch in Richtung der Längsachse 100 des Bolzens 10 in ein Bohrloch 99 im Substrat 5 aus Figur 1 geschoben. Aufgrund der Schulter 17, die eine Verschiebung der Spreizhülse 20 vom Spreizkonus 12 hinweg begrenzt, wird dabei auch die Spreizhülse 20 in das Bohrloch 99 eingebracht. Sodann wird der Bolzen 10 durch Anziehen der am Anbauteil 6 anliegenden Mutter 8 wieder ein Stück weit in der parallel zur Längsachse 100 verlaufenden Auszugsrichtung 101 aus dem Bohrloch 99 herausgezogen. Aufgrund ihrer Reibung an der im Wesentlichen zylindrischen Wand 98 des Bohrlochs 99 bleibt die Spreizhülse 20 dabei im Bohrloch 99 zurück und es kommt infolgedessen zu einer Verschiebung des Bolzens 10 relativ zur Spreizhülse 20. Bei dieser Verschiebung dringt die Schrägfläche 13 des Spreizkonus 12 des Bolzens 10 immer tiefer so in die Spreizhülse 20 ein, dass die Spreizhülse 20 im Bereich ihres vorderen Endes von der Schrägfläche 13 radial aufgeweitet und mit der Wand 98 des Bohrlochs 99 verpresst wird. Durch diesen Mechanismus wird der Spreizanker 1 im Substrat 5 fixiert. Der gesetzte Zustand des Spreizankers 1, in dem er im Substrat 5 fixiert ist, ist in Figur 1 gezeigt.

Wie insbesondere die Figuren 3, 5 und 6 zeigen, weist der Bolzen 10 drei Verdrehsicherungsvorsprünge 80, 80' und 80'' auf. Die Verdrehsicherungsvorsprünge 80, 80' und 80'' sind im Halsbereich 11 des Bolzens 10 angeordnet und gehen von der Schulter 17 aus, das heisst sie schliessen sich unmittelbar an die Schulter 17 an. Wie insbesondere Figur 6 zeigt, sind die Verdrehsicherungsvorsprünge 80, 80' und 80'' im Querschnitt des Bolzens 10 betrachtet äquidistant um den Umfang des Bolzens 10 herum angeordnet. Wie in Figur 6 weiter angedeutet ist, drücken die Verdrehsicherungsvorsprünge 80, 80' und 80'' radial von innen gegen die etwa zylindrische Innenseite 21 der Spreizhülse 20. Hierdurch sorgen sie für eine erhöhte Reibung zwischen Spreizhülse 20 und Bolzen 10 und wirken daher einem unerwünschten Durchdrehen des Bolzens 10 in der Spreizhülse 20 beim Setzen des Ankers entgegen. Je nach Ausgestaltung können die Verdrehsicherungsvorsprünge 80, 80' und 80'' ausschliesslich oberflächlich wirken oder auch mehr oder weniger tief in die Spreizhülse 20 eingedrückt sein, um eine gemischt formschlüssig und reibschlüssige Drehkopplung zu erreichen.

Wie insbesondere in Figur 5 erkennbar ist, ist die axiale Länge l der Verdrehsicherungsvorsprünge 80, das heisst insbesondere deren maximale Ausdehnung in Richtung der Längsachse 100, kleiner als die Steigung p des Gewindeabschnitts 18, das heisst

$$ l < p. $$

Damit wirken die Verdrehsicherungsvorsprünge 80 nur ganz am Anfang des Setzvorgangs und kuppeln von der Spreizhülse 20 aus, sobald der Spreizvorgang fortgeschritten und die Spreizhülse 20 ein kleines Stück von der Schulter 17 hinweg zum Spreizkonus 12 hin verschoben ist. Insbesondere kann hierdurch gewährleistet werden, dass die Verdrehsicherungsvorsprünge 80 die Interaktion zwischen Spreizhülse 20 und Spreizkonus 12 bei gesetztem Anker nicht beeinträchtigen.

In einer anderen Betrachtungsweise kann die axiale Länge l der Verdrehsicherungsvorsprünge 80 kleiner als das 0.1-fache des maximalen Durchmesser $d_{max}$ des Bolzens 10 sein, der insbesondere an der Schulter 17 vorliegen kann, wie Figur 4 zeigt. In einer weiteren Betrachtungsweise kann die axiale Länge l der Verdrehsicherungsvorsprünge 80 kleiner als das 0.1-fache der maximalen axialen Ausdehnung $l_{s,max}$ der Spreizhülse 20 sein, die in Figur 1 gekennzeichnet ist. In einer noch weiteren Betrachtungsweise kann die axiale Länge l der Verdrehsicherungsvorsprünge 80 kleiner sein als die senkrecht zur Längsachse 100 gemessene maximale Dicke $t_{s,max}$ der Spreizhülse 20, die in Figur 6 gekennzeichnet ist.

Die Spreizhülse 20 kann, wie insbesondere in den Figuren 2 und 6 gezeigt ist, zur besseren Verankerung an der Bohrlochwand 98 aussenzeitige Vorsprünge 90 und 91 aufweisen. Diese können beispielsweise als radiale Einprägungen ausgebildet sein, so dass, wie in Figur 6 erkennbar ist, auf der Innenseite 21 der Spreizhülse 20 entsprechende Ausnehmungen ausgeformt sein können.

**Patentansprüche**

1. Spreizanker (1) mit

   - einem Bolzen (10) und
   - einer Spreizhülse (20), welche den Bolzen (10) umgibt,
   - wobei der Bolzen (10) im Bereich seines vorderen Endes (51) einen Spreizkonus (12) aufweist, welcher die Spreizhülse (20) radial aufweitet, wenn er in die Spreizhülse (20) eingezogen wird,
   - wobei der Bolzen (10) einen Gewindeabschnitt (18) zum Einleiten von Zugkräften in den Bolzen (10) aufweist,
   - wobei der Bolzen (10) eine Schulter (17) aufweist, die eine Verschiebung der Spreizhülse (20) vom Spreizkonus (12) hinweg begrenzt, und
   - wobei der Bolzen (10) zumindest einen Verdrehsicherungsvorsprung (80) zum Hemmen einer Verdrehung der Spreizhülse (20) relativ zum Bolzen (10) aufweist, der von der Schulter (17) ausgeht und am Bolzen (10) radial nach aussen vorsteht, **dadurch gekennzeichnet,**
   - **dass** die axiale Länge (I) des Verdrehsicherungsvorsprungs (80) kleiner ist als das Doppelte der Ganghöhe (p) des am Bolzen angeordneten Gewindeabschnitts (18).

2. Spreizanker (1) nach Anspruch 1, **dadurch gekennzeichnet,**

   - **dass** die axiale Länge (I) des Verdrehsicherungsvorsprungs (80) kleiner ist als die Ganghöhe (p) des am Bolzen angeordneten Gewindeabschnitts (18),
   - **dass** die axiale Länge (I) des Verdrehsicherungsvorsprungs (80) kleiner ist als das 0.1-fache der maximalen axialen Ausdehnung ($I_{s,max}$) der Spreizhülse (20),
   - **dass** die axiale Länge (I) des Verdrehsicherungsvorsprungs (80) kleiner ist als die maximale Dicke ($t_{s,max}$) der Spreizhülse (20), oder/und
- **dass** die axiale Länge (I) des Verdrehsicherungsvorsprungs (80) kleiner ist als das 0.1-fache des maximalen Durchmessers ($d_{max}$) des Bolzens (10).

3. Spreizanker (1) nach Anspruch 1 oder 2,
**dadurch gekennzeichnet,**
**dass** der Verdrehsicherungsvorsprung (80) gegen die dem Bolzen (10) zugewandte Innenseite (21) der Spreizhülse (20) wirkt.

4. Spreizanker (1) nach einem der vorstehenden Ansprüche,
**dadurch gekennzeichnet,**
**dass** der Bolzen zumindest einen weiteren Verdrehsicherungsvorsprung (80', 80") aufweist.

5. Spreizanker (1) nach einem der vorstehenden Ansprüche,
**dadurch gekennzeichnet,**
**dass** die Spreizhülse (20) zumindest einen Schlitz (22) aufweist, und dass der Bolzen einen Sperrvorsprung aufweist, der in den Schlitz (22) eingreift.

6. Spreizanker nach einem der vorstehenden Ansprüche,
**dadurch gekennzeichnet,**
**dass** der Gewindeabschnitt (18) ein Aussengewindeabschnitt ist.

7. Spreizanker nach einem der vorstehenden Ansprüche,
**dadurch gekennzeichnet,**
**dass** auf dem Gewindeabschnitt (18) eine Mutter (8) mit einem zum Gewindeabschnitt (18) korrespondierenden Gewinde angeordnet ist.


**Claims**

1. Expansion anchor (1), comprising

    - a stud (10) and
    - an expansion sleeve (20) surrounding the stud (10),
    - wherein the stud (10) has in the region of its forward end (51) an expansion cone (12) which enlarges the expansion sleeve (20) radially when it is drawn into the expansion sleeve (20),
    - wherein the stud (10) has a threaded portion (18) for introducing tensile forces into the stud (10),
    - wherein the stud (10) has a shoulder (17) which limits displacement of the expansion sleeve (20) away from the expansion cone (12), and
    - wherein the stud (10) has at least one anti-rotation protrusion (80) for inhibiting rotation of the expansion sleeve (20) relative to the stud (10), which protrusion (80) starts from the shoulder (17) and protrudes radially outwards on the stud (10),

    **characterised in that**

    - the axial length (I) of the anti-rotation protrusion (80) is less than twice the pitch (p) of the threaded portion (18) arranged on the stud.

2. Expansion anchor (1) according to Claim 1,
**characterised in that**

    - the axial length (I) of the anti-rotation protrusion (80) is less than the pitch (p) of the threaded portion (18) arranged on the stud,
    - the axial length (I) of the anti-rotation protrusion (80) is less than 0.1 times the maximum axial extent ($I_{s,max}$) of the expansion sleeve (20),
    - the axial length (I) of the anti-rotation protrusion (80) is less than the maximum thickness ($t_{s,max}$) of the expansion sleeve (20), or/and
    - the axial length (I) of the anti-rotation protrusion (80) is less than 0.1 times the maximum diameter ($d_{max}$) of the stud (10).

3. Expansion anchor (1) according to Claim 1 or 2,
**characterised in that**
the anti-rotation protrusion (80) acts against the inner side (21) of the expansion sleeve (20) facing towards the stud (10).

4. Expansion anchor (1) according to any one of the preceding claims,
**characterised in that**
the stud has at least one further anti-rotation protrusion (80', 80").

5. Expansion anchor (1) according to any one of the preceding claims,
**characterised in that**
the expansion sleeve (20) has at least one slot (22) and **in that** the stud has a locking protrusion which engages in the slot (22).

6. Expansion anchor according to any one of the preceding claims,
**characterised in that**
the threaded portion (18) is an externally threaded portion.

7. Expansion anchor according to any one of the preceding claims,
**characterised in that**
a nut (8) with a thread corresponding to the threaded portion (18) is arranged on the threaded portion (18).

## Revendications

1. Ancrage expansible (1) comportant :

   - un goujon (10) et
   - une douille d'expansion (20) entourant le boulon (10),
   - dans lequel le boulon (10) comporte un cône d'expansion (12) dans la zone de son extrémité avant (51), lequel cône d'expansion élargit radialement la douille d'expansion (20) lorsqu'il est tiré dans la douille d'expansion (20),
   - dans lequel le boulon (10) comporte une partie filetée (18) pour introduire des forces de traction dans le boulon (10),
   - dans lequel le boulon (10) comporte un épaulement (17) qui limite un déplacement de la douille d'expansion (20) en s'éloignant du cône d'expansion (12), et
   - dans lequel le boulon (10) comporte au moins une saillie anti-rotation (80) pour empêcher une rotation de la douille d'expansion (20) par rapport au boulon (10), laquelle saillie anti-rotation sort de l'épaulement (17) et fait radialement saillie vers l'extérieur sur le boulon (10),

   **caractérisé en ce que**

   - la longueur axiale (1) de la saillie anti-rotation (80) est plus petite que le double du pas (p) de la partie filetée (18) agencée sur le boulon.

2. Ancrage expansible (1) selon la revendication 1, **caractérisé en ce que**

   - la longueur axiale (1) de la saillie anti-rotation (80) est plus petite que le pas (p) de la partie filetée (18) agencée sur le boulon,
   - la longueur axiale (1) de la saillie anti-rotation (80) est plus petite que 0,1 fois l'extension axiale maximale ($l_{s,max}$) de la douille d'expansion (20),
   - la longueur axiale (1) de la saillie anti-rotation (80) est plus petite que l'épaisseur maximale ($t_{s,max}$) de la douille d'expansion (20), et/ou
   - la longueur axiale (1) de la saillie anti-rotation (80) est plus petite que 0,1 fois le diamètre maximal ($d_{max}$) du boulon (10).

3. Ancrage expansible (1) selon la revendication 1 ou 2, **caractérisé en ce que** la saillie anti-rotation (80) agit contre le côté intérieur (21) de la douille d'expansion (20) dirigé vers le boulon (10).

4. Ancrage expansible (1) selon l'une des revendications précédentes, **caractérisé en ce que** le boulon comporte au moins une saillie anti-rotation supplémentaire (80', 80").

5. Ancrage expansible (1) selon l'une des revendications précédentes, **caractérisé en ce que** la douille d'expansion (20) comporte au moins une fente (22) et le boulon comporte une saillie de blocage qui s'engage dans la fente (22).

6. Ancrage expansible selon l'une des revendications précédentes, **caractérisé en ce que** la partie filetée (18) est une partie filetée extérieure.

7. Ancrage expansible selon l'une des revendications précédentes, **caractérisé en ce que** sur la partie filetée (18) est agencé un écrou (8) ayant un filetage correspondant à la partie filetée (18).

Fig. 1

$I_{s,max}$

13

20

100

5

1, 10

6

101

99

51

12

21

11

17

98

18

52

8

Fig. 2

1, 10

20

22'

18

12

17

90

91

Fig. 3

1, 10

80'

11

18

12

80

17

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4116149 A1
- US 3855896 A
- DE 2256822 A1
- DE 29501182 U1
- DE 3411285 A1
- GB 1414562 A
- CA 953958 A1

- DE 2161224 A1
- US 3750526 A
- EP 0874167 B1
- DE 6610690 U
- EP 0893610 A1
- DE 102008057584 A1
- DE 3508015 A1